# EUROPÄISCHE PATENTSCHRIFT

(11) **EP 4 191 085 B1**
(45) Veröffentlichungstag und Bekanntmachung des Hinweises auf die Patenterteilung: **10.09.2025**
(21) Anmeldenummer: 20947675.3
(22) Anmeldetag: 28.07.2020
(51) Int. Cl.: F16D 3/205

(54) **KUPPLUNG MIT DREI KUGELSTIFTEN UND LENKMECHANISMUS**
THREE BALL PIN-TYPE COUPLING AND STEERING MECHANISM
ACCOUPLEMENT DU TYPE BROCHE À TROIS BILLES ET MÉCANISME DE DIRECTION

(43) Veröffentlichungstag der Anmeldung: 07.06.2023
(73) Patentinhaber: Schaeffler Technologies AG & Co. KG, 91074 Herzogenaurach (DE)
(72) Erfinder: YAN, Liuqing, Shanghai 200032 (CN); JI, Yandong, Shanghai 201800 (CN)
(86) Internationale Anmeldenummer: PCT/CN2020/105259
(87) Internationale Veröffentlichungsnummer: WO 2022/021081

(56) Entgegenhaltungen:
- WO-A1-2016/152667
- CN-A- 101 749 331
- CN-A- 103 249 957
- CN-A- 103 967 955
- CN-A- 108 700 127
- CN-A- 111 306 205
- CN-A- 111 306 205
- CN-U- 210 978 263
- JP-A- 2005 321 033
- JP-A- 2005 344 737
- JP-A- H03 168 416
- US-A- 5 061 223
- US-A- 6 074 303

## Beschreibung

### Technisches Gebiet

Die vorliegende Erfindung betrifft das Gebiet der Kupplungen und insbesondere Kupplungen mit drei Kugelbolzen für einen Lenkmechanismus eines Fahrzeugs.

### Hintergrund

Lenkmechanismen von Fahrzeugen und insbesondere elektrische Servolenkmechanismen verwenden im Allgemeinen ein Schneckenrad- und Schneckengetriebe, um das Drehmoment des Motors zu verstärken und Zahnstangen anzutreiben, um das Lenken durchzuführen. Derartige Lenkmechanismen schließen zum Beispiel Säulen- und Doppelritzel-Lenkmechanismen ein.

Eines der üblicherweise verwendeten Schneckensysteme bei den vorstehend erwähnten Lenkmechanismen verbindet die Ausgangswelle des Motors mit der Schneckenwelle als Außenwelle und eine Innenwelle durch eine Kupplung, wodurch die Übertragung des Motordrehmoments realisiert wird. Das Drehmoment des Motors wird weiter auf das Schneckenrad und die Schnecke übertragen, die nahe beieinander liegen und miteinander in Eingriff stehen, und wird dadurch verstärkt, um andere Komponenten in dem gesamten Lenksystem anzutreiben.

Der tragende Teil des beschriebenen Schneckensystems umfasst ein Pendellager auf einer Seite der Schnecke und ein Rillenkugellager auf der anderen Seite. Um den kontinuierlichen und stabilen Eingriff des Schneckenrad- und Schneckensystems sicherzustellen, ist eine Feder entlang der vertikalen Richtung der Eingriffsachse von Schneckenrad und Schnecke an dem Teil der Schnecke angeordnet, an dem das Rillenkugellager bereitgestellt ist.

Damit das Schneckenrad und die Schnecke zum Beispiel einem Übersetzungsverhältnis von 21 aufweisen, beträgt das durch die Kupplung auf das Schneckengetriebe übertragene Drehmoment etwa 100 Nm, wenn das Motordrehmoment 5 Nm beträgt (unter Berücksichtigung des Wirkungsgradverlusts des Schneckenrads und der Schnecke während des Drehmomentübertragungsprozesses), und daher beträgt die Antriebskraft gegen die Zahnstangen etwa 10 kN, die zum Antreiben der Räder verwendet wird, um den Lenkvorgang durchzuführen. Als Fertigungsmaterial der Kontaktoberfläche zwischen dem Schneckenrad und der Schnecke werden zur geräuschlosen Drehmomentübertragung im Allgemeinen technische Kunststoffe verwendet. Diese Kunststoff-Kontaktoberfläche kann sich jedoch nach längerem Gebrauch abnutzen, was dazu führt, dass die Achse der Schneckenwelle unter der Wirkung der Federkraft in einem bestimmten Winkel einem Versatzausgleich Schneckenwelle unterliegt (der Versatz beträgt in der Regel maximal ±1,5°). um sicherzustellen, dass das Schneckenrad und die Schnecke vor und nach einem Langzeitgebrauch im Wesentlichen die gleiche Eingriffsqualität aufweisen.

Die Erhöhung des Ausgangsdrehmoments des Motors (z. B. von 5 Nm auf 8 Nm) zur Anpassung an den Antrieb von Fahrzeugen mit höheren Lasten führt jedoch nach einem Langzeitgebrauch zu einem stärkeren Oberflächenverschleiß der Kunststoffoberfläche des Schneckenrads, was wiederum einen größeren Achsversatzwinkel (Ausgleichswinkel) der Schnecke erforderlich macht.

Während das auf einer Seite der Schnecke befindliche Pendellager problemlos einen größeren Pendelwinkel erreichen kann, weist die zwischen dem Motor und der Schnecke angeordnete Kupplung in der Regel eine begrenzte Selbstausrichtungsfähigkeit auf. Sobald der Versatzwinkel der Achse der Schnecke die vorgesehene Ausgleichsfähigkeit der Kupplung überschreitet, neigt das System zu einer Reihe von Problemen wie z. B. Vibrationsgeräuschen, Hysterese der Drehmomentübertragung und Spiel infolge des Verschleißes am Zahneingriffsprofil.

Daher ist es dringend erforderlich, den Ausgleichsbereich des Selbstausrichtungswinkels der Kupplung bei gleichzeitiger Gewährleistung der Torsionssteifigkeit zu erweitern.

Die US 6 074 303 A offenbart eine Kupplung mit drei Kugelbolzen, umfassend einen ersten Verbinder und einen zweiten Verbinder, die drehfest verbunden sind, wobei der erste Verbinder eine Bolzenanordnung mit drei Wellen, Laufringanordnungen und eine Käfiganordnung umfasst;die Bolzenanordnung mit drei Wellen eine Welle und drei Kugelringe umfasst, die die Welle umgeben und in Umfangsrichtung der Welle in Abständen angeordnet sind; drei Laufringanordnungen vorhanden sind; jeder Kugelring mit einer der Laufringanordnungen verbunden ist; die Käfiganordnung die Position der Laufringanordnungen in Umfangsrichtung definiert;die Laufringanordnungen eine elastische Kraft zwischen dem Kugelring und der Käfiganordnung bereitstellen können; und wenn sich der Kugelring relativ zu der Käfiganordnung in Umfangsrichtung verschiebt, zwei Seiten der Laufringanordnung in Umfangsrichtung an der Käfiganordnung weiterhin anliegen.

Ebenso zeigen die WO 2016/152667 Al , JP 2005 344737 A, US 5 061 223 A und die JP H03 168416 A Kupplungen mit drei Kugelbolzeb, welche über zwei Verbunder drehfest verbunden sind.

### Kurzdarstellung

Der Zweck der vorliegenden Erfindung besteht darin, eine Kupplung mit drei Kugelbolzen und einen Lenkmechanismus bereitzustellen, um die vorstehenden Nachteile des Standes der Technik zu überwinden oder mindestens abzumildern.

Gemäß einem ersten Aspekt der vorliegenden Erfindung wird eine Kupplung mit drei Kugelbolzen bereitgestellt, wobei die Kupplung mit drei Kugelbolzen einen ersten Verbinder und einen zweiten Verbinder umfasst, die drehfest verbunden sind, wobei
der erste Verbinder eine Bolzenanordnung mit drei Wellen, Laufringanordnungen und eine Käfiganordnung umfasst;
die Bolzenanordnung mit drei Wellen eine Welle und drei Kugelringe umfasst, die die Welle umgeben und in Umfangsrichtung der Welle in Abständen angeordnet sind; drei Laufringanordnungen vorhanden sind; jeder Kugelring mit einer der Laufringanordnungen verbunden ist; die Käfiganordnung die Position der Laufringanordnungen in Umfangsrichtung definiert;
die Laufringanordnungen eine elastische Kraft zwischen dem Kugelring und der Käfiganordnung bereitstellen können; und wenn sich der Kugelring relativ zu der Käfiganordnung in Umfangsrichtung verschiebt, zwei Seiten der Laufringanordnung in Umfangsrichtung weiterhin an der Käfiganordnung anliegen.

Bei mindestens einer Ausführungsform umfassen die Laufringanordnungen Laufringrahmen, innere Laufringe, äußere Laufringen und elastische Elemente;
jeder der Laufringrahmen ist mit zwei inneren Laufringen und zwei äußeren Laufringen versehen; zwei der inneren Laufringe sind voneinander beabstandet, um dazwischen einen Kugelringmontageabschnitt zu bilden; einer der äußeren Laufringe ist auf einer Seite jedes der inneren Laufringe entfernt von dem Kugelringmontageabschnitt montiert; ein innerer Laufring und ein äußerer Laufring, die auf derselben Seite des Kugelringmontageabschnitts angeordnet sind, bilden ein Laufringpaar;
das elastische Element ist mindestens teilweise zwischen dem inneren Laufring und dem äußeren Laufring bereitgestellt; und das elastische Element liegt an dem inneren Laufring und an dem äußeren Laufring jedes der Laufringpaare an.

Wenn sich der Kugelring bei mindestens einer Ausführungsform direkt in der Mitte von zwei der äußeren Laufringe befindet, wird das elastische Element durch den inneren Laufring und den äußeren Laufring zusammengerückt und dadurch elastisch verformt.

Bei mindestens einer Ausführungsform ändert sich der Steifigkeitskoeffizient des elastischen Elements während der elastischen Verformung des elastischen Elements.

Bei mindestens einer Ausführungsform ist ein Abschnitt des elastischen Elements zwischen dem inneren Laufring und dem äußeren Laufring mindestens teilweise wellenförmig.

Bei mindestens einer Ausführungsform ist das elastische Element insgesamt U-förmig; das elastische Element schließt einen Verbindungsabschnitt und zwei wellenförmige Federn ein, die mit zwei Enden des Verbindungsabschnitts verbunden sind; und
zwei der wellenförmigen Federn sind jeweils zwischen dem inneren Laufring und dem äußeren Laufring eines der Laufringpaare eingesetzt.

Bei mindestens einer Ausführungsform ist eine dem Kugelringmontageabschnitt zugewandte Seite des inneren Laufrings teilweise vertieft, um eine sphärische konkave Oberfläche zu bilden, die Teil einer sphärischen Oberfläche ist und mit dem Kugelring in Kontakt steht.

Bei mindestens einer Ausführungsform ist eine Seite des äußeren Laufrings, die von dem Kugelringmontageabschnitt abgewandt ist, teilweise vertieft, um eine gekrümmte Oberfläche in Kontakt mit der Käfiganordnung zu bilden.

Erfindungsgemäß schließt die Käfiganordnung einen Käfigkörper und Kugeln ein;
der Käfigkörper schließt einen ringförmigen Abschnitt und drei Arme ein, die mit dem ringförmigen Abschnitt verbunden sind; die Arme erstrecken sich entlang einer axialen Richtung des ringförmigen Abschnitts; zwei Seiten der Arme in Umfangsrichtung sind mit mehreren eingekerbten Kugeltaschen ausgebildet;
die Kugeln sind in den Kugeltaschen untergebracht und können relativ zu den Kugeltaschen innerhalb der Kugeltaschen rollen;
jeder der Arme ist zwischen zwei der Laufringanordnungen eingesetzt; und die Kugeln liegen an den Laufringanordnungen an.

Bei mindestens einer Ausführungsform ist ein mittlerer Abschnitt jedes der Arme, der sich in Umfangsrichtung zwischen zwei Reihen der Kugeltaschen befindet, radial und nach innen vertieft, um eine Armaussparung zu bilden.

Bei mindestens einer Ausführungsform schließt der zweite Verbinder eine röhrenförmige Gleitmuffe ein, die ein erstes Ende in axialer Richtung aufweist, das mit dem ersten Verbinder verbunden ist;
ein innerer Hohlraum der Gleitmuffe schließt drei vorstehende Rippen in axialer Richtung nahe dem ersten Ende ein, die radial und nach innen vorstehen und in Umfangsrichtung beabstandet sind; die vorstehenden Rippen erstrecken sich in der axialen Richtung, um eine Nut zwischen jeweils zwei benachbarten vorstehenden Rippen zu bilden;
die Arme sind mit den vorstehenden Rippen in Umfangsrichtung ausgerichtet; die Kugeln liegen an den vorstehenden Rippen an; und jede der Laufringanordnungen ist in einer der Nuten aufgenommen.

Bei mindestens einer Ausführungsform sind zwei Seiten jeder der vorstehenden Rippen in Umfangsrichtung jeweils mit einer vertieften gewölbten Oberfläche ausgebildet, und die Kugeln liegen an den gewölbten Oberflächen an.

Bei mindestens einer Ausführungsform ist ein Hakenabschnitt, der in einer radialen Richtung des ringförmigen Abschnitts nach außen vorsteht, an dem Ende des Arms weg von dem ringförmigen Abschnitt ausgebildet;
der Hakenabschnitt hakt in die vorstehende Rippe ein, um zu verhindern, dass sich die Käfiganordnung von dem ersten Ende löst.

Bei mindestens einer Ausführungsform schließt ein äußerer Umfangsabschnitt des ringförmigen Abschnitts mehrere ringförmige Vorsprünge ein, die radial und nach außen vorstehen, und die ringförmigen Vorsprünge liegen an einer Endfläche der Gleitmuffe an dem ersten Ende an, um die Käfiganordnung in der axialen Richtung zu begrenzen.

Bei mindestens einer Ausführungsform weist der innere Hohlraum der Gleitmuffe die vorstehenden Rippen an einem in axialer Richtung von dem ersten Ende entfernten zweiten Ende nicht auf;
der zweite Verbinder schließt ferner eine Vibrationsdämpfungsanordnung ein, die an dem zweiten Ende relativ zu der Gleitmuffe drehfest montiert ist; die Vibrationsdämpfungsanordnung erstreckt sich mindestens teilweise in den inneren Hohlraum der Gleitmuffe;
die Welle liegt an der Vibrationsdämpfungsanordnung an, ein axiales Ende der Welle nahe der Vibrationsdämpfungsanordnung bildet eine sphärische Oberfläche; und ein Abschnitt der Vibrationsdämpfungsanordnung, der mit der Welle in Kontakt steht, ist als sphärische Oberfläche geformt.

Bei mindestens einer Ausführungsform schließt die Vibrationsdämpfungsanordnung einen Adapter, ein Schalengehäuse und einen Puffer ein;
der Adapter und die Gleitmuffe sind drehfest miteinander verbunden;
das Schalengehäuse ist mit dem Adapter verbunden; der Puffer ist zwischen dem Schalengehäuse und dem Adapter bereitgestellt;
ein Abschnitt der Welle, der mit der Vibrationsdämpfungsanordnung in Kontakt steht, befindet sich an dem Schalengehäuse; und ein Abschnitt des Schalengehäuses, der in Kontakt mit der Welle steht, bildet einen vertieften konkaven Kugelabschnitt in Form einer sphärischen Oberfläche.

Bei mindestens einer Ausführungsform bildet ein innerer Umfangsabschnitt des Adapters eine steckverzahnte Bohrung.

Bei mindestens einer Ausführungsform ist der Adapter in den inneren Hohlraum der Gleitmuffe eingebettet;
ein mittlerer Abschnitt der der Welle zugewandten Endfläche des Adapters bildet einen Vorsprung, indem er in Richtung der Welle vorsteht; und das Schalengehäuse ist so auf den Vorsprung aufgeschoben, dass das Schalengehäuse relativ zu dem Vorsprung axial beweglich ist.

Bei mindestens einer Ausführungsform ist bei nicht zusammengedrücktem Puffer ein Spalt zwischen dem Schalengehäuse und der der Welle zugewandten Endfläche des Adapters vorhanden.

Gemäß einem zweiten Aspekt der vorliegenden Erfindung wird ein Lenkmechanismus bereitgestellt, der einen Motor, eine Kupplung und eine Schneckenrad- und Schneckenanordnung umfasst, wobei die Kupplung eine Kupplung mit drei Kugelbolzen gemäß der vorliegenden Erfindung ist;
das erste Verbindungsstück der Kupplung mit drei Kugelbolzen und eine Schnecke der Schneckenrad- und Schneckenanordnung sind drehfest verbunden; und der zweite Verbinder der Kupplung mit drei Kugelbolzen und eine Ausgangswelle des Motors sind drehfest verbunden.

Die Kupplung mit drei Kugelbolzen gemäß der vorliegenden Erfindung kann Vibrationen während des Übertragungsvorgangs reduzieren und kann ein Drehmoment effektiv übertragen, wenn ein axialer Versatz zwischen Übertragungskomponenten vorhanden ist.

Der Lenkmechanismus gemäß der vorliegenden Erfindung neigt während des Betriebs nicht zu Spiel und Vibrationsstoß beim Rückwärtsfahren.

### Kurzbeschreibung der Zeichnungen

FIG. 1 ist eine schematische Darstellung einer Kupplung mit drei Kugelbolzen gemäß einer Ausführungsform der vorliegenden Erfindung.
FIG. 2 ist eine Querschnittsansicht von FIG. 1 entlang der axialen Richtung.
FIG. 3 ist eine schematische Strukturdarstellung der Welle 11 in FIG. 2.
FIG. 4 ist eine schematische Strukturdarstellung des Gelenks 12 mit drei Bolzen und der Kugelringe 13 in FIG. 2.
FIG. 5 ist eine schematische Strukturdarstellung der Laufringanordnung 20 in FIG. 1.
FIG. 6 ist eine schematische Darstellung des Laufringrahmens 21 der Laufringanordnung 20 FIG. 5.
FIG. 7 ist eine schematische Darstellung des Laufrings 22 der Laufringanordnung 20 in FIG. 5.
FIG. 8 ist eine schematische Darstellung des äußeren Laufrings 23 der Laufringanordnung 20 in FIG. 5.
FIG. 9 ist eine schematische Darstellung des elastischen Elements 24 der Laufringanordnung 20 in FIG. 5.
FIG. 10 ist eine schematische Strukturdarstellung der Käfiganordnung 30 in FIG. 1.
FIG. 11 ist eine Schematische Strukturdarstellung des Käfigkörpers 31 in FIG. 10.
FIG. 12 ist eine schematische Strukturdarstellung der Gleitmuffe 40 in FIG. 1.
FIG. 13 ist eine schematische Strukturdarstellung der Vibrationsdämpfungsanordnung 50 in FIG. 1.
FIG. 14 ist eine schematische Strukturdarstellung des Adapters 51 in FIG. 13.
FIG. 15 ist eine schematische Schnittdarstellung des Schalengehäuses 52 und des Puffers 53 in FIG. 2.

### Ausführliche Beschreibung von Ausführungsformen

Beispielhafte Ausführungsformen der vorliegenden Erfindung werden nachstehend unter Bezugnahme auf die Zeichnungen beschrieben. Es versteht sich, dass die konkrete Beschreibung Fachleute nur lehren soll, wie die vorliegende Erfindung zu realisieren ist, und weder alle möglichen Variationen der vorliegenden Erfindung erschöpfend darlegt noch den Schutzumfang der vorliegenden Erfindung einschränken soll.

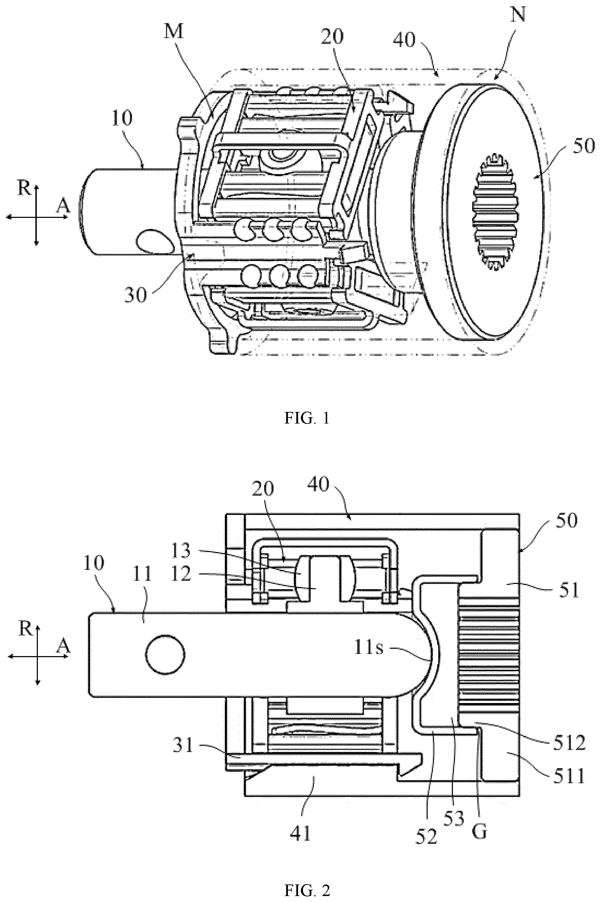

Sofern nicht anders angegeben, bezeichnet A unter Bezugnahme auf die FIG. 1 und 2 die axiale Richtung einer Kupplung mit drei Kugelbolzen, die mit der axialen Richtung einer Gleitmuffe 40 zusammenfällt; und R bezeichnet die radiale Richtung der Kupplung mit drei Kugelbolzen, die mit der radialen Richtung der Gleitmuffe 40 zusammenfällt.

Eine Kupplung mit drei Kugelbolzen (im Folgenden auch als Kupplung bezeichnet) und ein Lenkmechanismus, der die Kupplung gemäß der vorliegenden Erfindung einschließt, werden unter Bezugnahme auf die FIG. 1 bis 15 beschrieben.

Der Lenkmechanismus gemäß der vorliegenden Erfindung umfasst einen Motor, eine Kupplung mit drei Kugelbolzen und eine Schneckenrad- und Schneckenanordnung, wobei die Kupplung mit drei Kugelbolzen eine Ausgangswelle des Motors und eine Schnecke in der Schneckenrad- und Schneckenanordnung verbindet, sodass Drehmoment der Ausgangswelle auf die Schnecke übertragen werden kann.

Unter Bezugnahme auf die FIG. 1 und 2 schließt die Kupplung mit drei Kugelbolzen gemäß der Erfindung einen ersten Verbinder M und einen zweiten Verbinder N ein, die torsionsfrei (drehfest) verbunden sind, wobei der erste Verbinder M konfiguriert ist, um mit der Schnecke verbunden zu werden, und der zweite Verbinder N konfiguriert ist, um mit der Ausgangswelle des Motors verbunden zu werden.

Zunächst wird der erste Verbinder M gemäß einer Ausführungsform der vorliegenden Erfindung unter Bezugnahme auf die FIG. 1 bis 11 beschrieben.

Der erste Verbinder M umfasst eine Bolzenanordnung 10 mit drei Wellen, Laufringanordnungen 20 und eine Käfiganordnung 30.

Die Bolzenanordnung 10 mit drei Wellen umfasst eine Welle 11, ein Gelenk 12 mit drei Bolzen und Kugelringe 13.

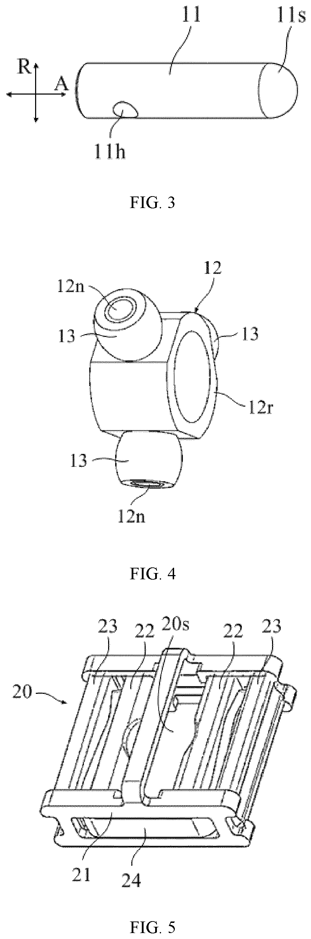

Die Welle 11 ist zum torsionsfreien Verbinden mit der Schnecke konfiguriert. Unter Bezugnahme auf FIG. 3 ist bei der vorliegenden Ausführungsform ein erstes Ende (das linke Ende in FIG. 3) der Welle 11 mit einer Bohrung 11h versehen, die die Welle 11 in einer radialen Richtung R durchdringt und zum Zusammenpassen mit einem Bolzen verwendet wird. Zum Beispiel ist ein Ende der Schnecke mit einer sich in axialer Richtung erstreckenden Innenbohrung und einer Bolzenbohrung versehen, die die Innenbohrung schneidet und sich in radialer Richtung erstreckt. Das erste Ende der Welle 11 kann in die Innenbohrung eingesetzt werden und der Bolzen wird verwendet, um durch die Bolzenbohrung und die Bohrung 11h zu verlaufen, wodurch die Welle 11 und die Schnecke torsionsfrei miteinander verbunden werden.

Ein zweites Ende (das rechte Ende in FIG. 3) der Welle 11 weist eine sphärische Oberfläche 11s auf und die sphärische Oberfläche 11s wird verwendet, um mit der Vibrationsdämpfungsanordnung 50 (im Detail nachstehend beschrieben) zusammenzupassen, um die Funktion einer Universalvorstellung zu erreichen.

Unter Bezugnahme auf die FIG. 2 und 4 umfasst das Gelenk 12 mit drei Bolzen einen Ring 12r, der in einem mittleren Abschnitt angeordnet ist, und drei Zapfen 12n, die mit einem äußeren Umfangsabschnitt des Rings 12r verbunden sind und sich in radialer Richtung des Rings 12r erstrecken. Vorzugsweise sind die drei Zapfen 12n in Umfangsrichtung des Rings 12r gleichmäßig in Abständen verteilt. Einer der Kugelringe 13 ist auf den äußeren Umfang jedes Zapfens 12n aufgeschoben und die äußere Umfangsoberfläche des Kugelrings 13 ist Teil einer sphärischen Oberfläche. Es versteht sich, dass zwischen dem Zapfen 12n und dem Kugelring 13 ein Wälzkörper bereitgestellt sein kann. Das Gelenk 12 mit drei Bolzen ist auf den äußeren Umfang der Welle 11 aufgeschoben und zum Beispiel durch Presssitz torsionsfrei mit der Welle 11 verbunden.

Unter Bezugnahme auf FIG. 1 ist jeder Kugelring 13 mit einer Laufringanordnung 20 verbunden und drei Laufringanordnungen 20 sind in der axialen Richtung A und in der Umfangsrichtung der Welle 11 durch die Käfiganordnung 30 begrenzt.

Die Laufringanordnungen 20 werden unter Bezugnahme auf die FIG. 5 bis 9 beschrieben.

Bei der vorliegenden Ausführungsform umfasst die Laufringanordnung 20 einen Laufringrahmen 21, einen inneren Laufring 22, einen äußeren Laufring 23 und ein elastisches Element 24.

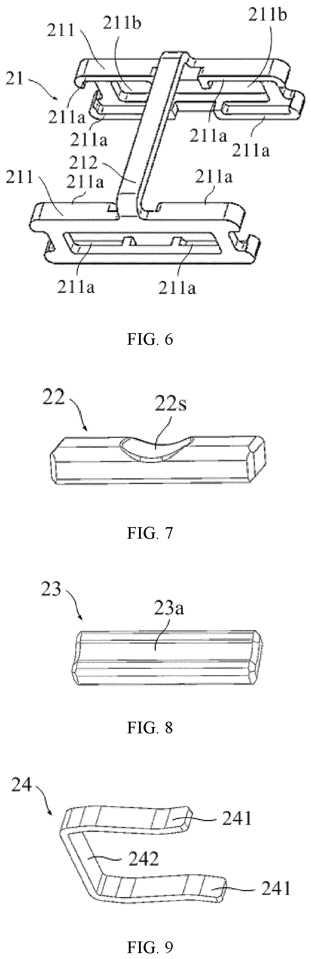

Unter Bezugnahme auf FIG. 6 umfasst der Laufringrahmen 21 zwei Seitenrahmen 211, die im Wesentlichen rechteckig sind, und eine Verbindungsstange 212, die die zwei Seitenrahmen 211 verbindet. Der mittlere Abschnitt des Seitenrahmens 211 weist eine Durchgangsbohrung auf, die in einer Richtung durchdringt, in der sich die Verbindungsstange 212 erstreckt. Taschenkanten 211a sind an gegenüberliegenden Innenoberflächen der zwei Seitenrahmen 211 konvex ausgebildet. Insbesondere sind vier Taschenkanten 211a an einem Seitenrahmen 211 ausgebildet und im Wesentlichen C-förmig, wobei sich der Hauptkörper der Taschenkante 211a, die an dem mittleren Abschnitt der C-Form angeordnet ist, entlang einer langen Kante des Seitenrahmens 211 erstreckt und die vier Taschenkanten 211a im Wesentlichen vier Ecken des Seitenrahmens 211 einnehmen. C-förmige Öffnungen zweier gegenüberliegender Taschenkanten 211a an den beiden langen Kanten des Seitenrahmens 211 liegen einander gegenüber, sodass zwischen den beiden Taschenkanten 211a ein Taschenschlitz 211b definiert ist. Jeder Seitenrahmen 211 weist zwei Taschenschlitze 211b auf, die sich jeweils auf zwei Seiten der Verbindungsstange 212 befinden und zum Montieren des inneren Laufrings 22 und des äußeren Laufrings 23 verwendet werden. Die Taschenschlitze 211b der beiden Seitenrahmen 211, die sich auf derselben Seite der Verbindungsstange 212 befinden, liegen sich zur Montage eines Laufringpaares gegenüber.

Gleichzeitig bilden unter Bezugnahme auf FIG. 5 ein innerer Laufring 22 und ein äußerer Laufring 23 ein Laufringpaar, eine Laufringanordnung 20 umfasst zwei Laufringpaare, der innere Laufring 22 ist auf der Innenseite des äußeren Laufrings 23 bereitgestellt und liegt näher an der Verbindungsstange 212 und zwei Enden sowohl des inneren Laufrings 22 als auch des äußeren Laufrings 23 erstrecken sich jeweils in zwei Taschenschlitze 211b, um eine Verbindung mit dem Laufringrahmen 21 herzustellen. Der Raum zwischen den zwei inneren Laufringen 22 bildet einen Kugelringmontageabschnitt 20s und der Kugelring 13 kann in den Kugelringmontageabschnitt 20s eingebettet sein.

Gleichzeitig sind unter Bezugnahme auf FIG. 7 gegenüberliegende Flächen der beiden inneren Laufringe 22 teilweise vertieft, um eine konkave Oberfläche 22s zu bilden, die vorzugsweise Teil einer sphärischen Oberfläche ist. Wenn der Kugelring 13 in den Kugelringmontageabschnitt 20s eingebettet ist, ist der Kugelring 13 durch die zwei konkaven Oberflächen 22s eingespannt. Der Kugelring 13 kann innerhalb eines kleinen Bereichs relativ zu der konkaven Oberfläche 22s in alle Richtungen vibrieren, kann sich jedoch nicht von der Laufringanordnung 20 lösen, da die sphärische Oberfläche des Kugelrings 13 mit der sphärischen Oberfläche der konkaven Oberfläche 22s zusammenpasst. Die Position der Laufringanordnung 20 in axialer Richtung A und in Umfangsrichtung relativ zu der Welle 11 kann derart ermittelt werden, dass der Kugelring 13 mit den beiden konkaven Oberflächen 22s der Laufringanordnung 20 zusammenpasst, da die Position des Kugelrings 13 relativ zu dem Gelenk 12 mit drei Bolzen (bzw. zu der Welle 11) in axialer Richtung A und in Umfangsrichtung ermittelt wird.

Unter Bezugnahme auf die FIG. 5 und 9 ist das elastische Element 24 im Wesentlichen U-förmig und umfasst einen Verbindungsabschnitt 242 und zwei wellenförmige Federn 241, die mit beiden Enden des Verbindungsabschnitts 242 verbunden sind. Die beiden wellenförmigen Federn 241 sind jeweils zwischen dem inneren Laufring 22 und dem äußeren Laufring 23 eines Laufringpaars eingesetzt, wobei der Verbindungsabschnitt 242 durch eine Bohrung in dem mittleren Abschnitt des Seitenrahmens 211 verläuft und vorzugsweise der Verbindungsabschnitt 242 vollständig in der Bohrung in dem mittleren Abschnitt des Seitenrahmens 211 untergebracht ist.

Beide Seiten der wellenförmigen Feder 241 liegen jeweils an dem inneren Laufring 22 und dem äußeren Laufring 23 an. Vorzugsweise ist im Ausgangszustand (wenn die Kupplung nicht an der Motorwelle und der Schnecke montiert ist und der Kugelring 13 genau in der Mitte der beiden äußeren Laufringe 23 angeordnet ist) die wellenförmige Feder 241 unter leichtem Zusammendrücken der inneren Laufrings 22 und des äußeren Laufrings 23 leicht nach unten verformt. Zu diesem Zeitpunkt drückt die durch die wellenförmige Feder 241 erzeugte elastische Kraft den inneren Laufring 22 und den äußeren Laufring 23 an die Konturkante des Taschenschlitzes 211b, das heißt, der innere Laufring 22 und der äußere Laufring 23 liegen an den Taschenkanten 211a an, um die Taschenschlitze 211b in der Richtung zu füllen, in der sich die langen Kanten der Seitenrahmen 211 erstrecken.

Während des Betriebs des Lenkmechanismus drückt der Kugelring 13 einen der inneren Laufringe 22 in eine bestimmte Richtung (dieser Zustand wird nachstehend beschrieben), wodurch bewirkt wird, dass sich die wellenförmige Feder 241 unter Kompression (weiter) verformt.

Die wellenförmige Feder 241 weist eine Wellenform auf und fällt unter die Kategorie einer nicht linearen Feder, das heißt, der Steifigkeitskoeffizient (auch als Elastizitätskonstante bezeichnet) der wellenförmigen Feder 241 ändert sich, wenn die wellenförmige Feder durch Zusammendrücken verformt wird. Da sich die wellenförmige Feder 241 in unterschiedlichem Maße verformt, ist dementsprechend auch die Kraft nicht linear, die durch die wellenförmige Feder 241 auf den inneren Laufring 22 und den äußeren Laufring 23 ausgeübt wird, und dies ist vorteilhaft, um eine bestimmte Übertragungssteifigkeit aufrechtzuerhalten.

Unter Bezugnahme auf die FIG. 5 und 8 ist der mittlere Abschnitt der Seite des äußeren Laufrings 23 weg von dem Kugelringmontageabschnitt 20s vertieft, um eine gekrümmte Oberfläche 23a zu bilden, die in Kontakt mit Kugeln 32 der Käfiganordnung 30 steht, was im Folgenden beschrieben wird.

Unter Bezugnahme auf die FIG. 1, 10 und 11 werden die spezielle Struktur der Käfiganordnung 30 und ihre Begrenzung auf die Laufringanordnung 20 wie folgt beschrieben.

Die Käfiganordnung 30 umfasst einen Käfigkörper 31 und Kugeln 32. Der Käfigkörper 31 umfasst einen ringförmigen Abschnitt 311 und drei mit dem ringförmigen Abschnitt 311 verbundene Arme 312, wobei die drei Arme 312 in Umfangsrichtung des ringförmigen Abschnitts 311 gleichmäßig beabstandet sind und sich in axialer Richtung des ringförmigen Abschnitts 311 erstrecken. Die Arme 312 greifen sowohl in die Laufringanordnung 20 als auch in vorstehende Rippen 41 der Gleitmuffe 40 des zweiten Verbinders N ein (im Folgenden weiter beschrieben).

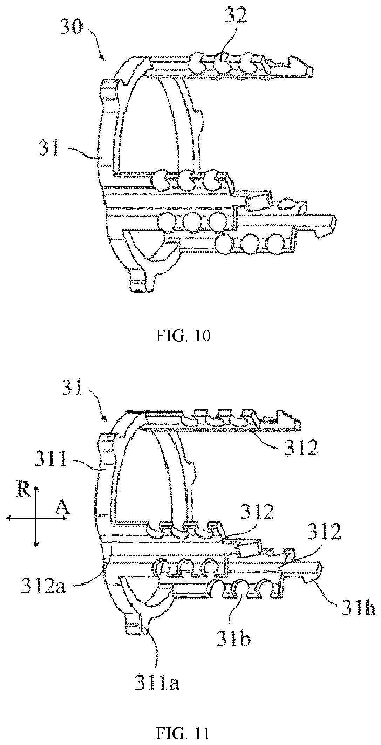

Unter Bezugnahme auf FIG. 11 ist jeder Arm 312 auf beiden Seiten in der Umfangsrichtung des ringförmigen Abschnitts 311 mit zwei Kerbenreihen ausgebildet, und jede Kerbenreihe umfasst mehrere (drei in der Figur) Kugeltaschen 31b in Form eines großen Halbkreises (eines Halbkreises, der einem Hauptbogen entspricht).

Unter Bezugnahme auf FIG. 10 nimmt jede Kugeltasche 31b eine Kugel 32 auf, die vorzugsweise eine aus Stahl hergestellte Stahlkugel ist. Die Kugeln 32 sind schwimmend in den Kugeltaschen 31b aufgenommen, das heißt, die Kugeln 32 können in den Kugeltaschen 31b rollen, ohne aus den Kugeltaschen 31b zu rollen.

Unter erneuter Bezugnahme auf FIG. 11 ist der mittlere Abschnitt jedes Arms 312, der sich in der Umfangsrichtung zwischen zwei Reihen der Kugeltaschen 31b befindet, radial und nach innen vertieft, um eine Armaussparung 312a zu bilden. Ein Hakenabschnitt 31h, der radial und nach außen vorsteht, ist an einem Ende des Arms 312 weg von dem ringförmigen Abschnitt 311 ausgebildet. Vorzugsweise weist der äußere Umfangsabschnitt des ringförmigen Abschnitts 311 ebenfalls drei radial und nach außen vorstehende ringförmige Vorsprünge 311a auf, die zwischen zwei benachbarten Armen 312 in der Umfangsrichtung angeordnet sind. Die Armaussparung 312a ist konfiguriert, um mit der vorstehenden Rippe 41 (im Folgenden beschrieben) der Gleitmuffe 40, die sich an dem zweiten Verbinder N befindet zusammenzupassen, um eine Position zwischen dem ersten Verbinder M und dem zweiten Verbinder N in der Umfangsrichtung zu definieren; der Hakenabschnitt 31h ist konfiguriert, um in die vorstehende Rippe 41 einzuhaken, um eine Position zwischen dem ersten Verbinder M und dem zweiten Verbinder N in der axialen Richtung A zu definieren; und die ringförmigen Vorsprünge 311a sind konfiguriert, um an einer Endfläche (im Folgenden beschrieben) eines ersten Endes 401 der Gleitmuffe 40 in der axialen Richtung A anzuliegen, um eine Position zwischen dem ersten Verbinder M und dem zweiten Verbinder N in der axialen Richtung A zu definieren.

Unter erneuter Bezugnahme auf FIG. 1 ist in Bezug auf den ersten Verbinder M eine Laufringanordnung 20 zwischen zwei benachbarten Armen 312 untergebracht und die Kugeln 32 liegen an der gekrümmten Oberfläche 23a des äußeren Laufrings 23 der Laufringanordnung 20 an. Außerdem liegt die Laufringanordnung 20 (insbesondere der Laufringrahmen 21 der Laufringanordnung 20) an dem Käfigkörper 31 der Käfiganordnung 30 in der axialen Richtung A an, sodass verhindert wird, dass sich die Laufringanordnung 20 von der in FIG. 1 gezeigten linken Seite löst.

An diesem Punkt kann der Leser verstehen, wie die Bolzenanordnung 10 mit drei Wellen, die Laufringanordnungen 20 und die Käfiganordnung 30 verbunden sind, um ein integrales Ganzes zu bilden. Der erste Verbinder M des Ganzen kann ein Drehmoment in der Umfangsrichtung übertragen, mit anderen Worten, die Käfiganordnung 30 kann ein Drehmoment auf die Welle 11 über die Laufringanordnungen 20, die Kugelringe 13 und das Gelenk 12 mit drei Bolzen übertragen, und jede Komponente des ersten Verbinders M kann Vibration während des Prozesses des gegenseitigen Übertragens von Drehmoment (im Folgenden beschrieben) absorbieren.

Als Nächstes werden der zweite Verbinder N gemäß der vorliegenden Erfindung und die Verbindungsbeziehung zwischen dem zweiten Verbinder N und dem ersten Verbinder M unter Bezugnahme auf die FIG. 1, 2 und 12 bis 15 beschrieben.

Der zweite Verbinder N umfasst eine Gleitmuffe 40 und eine Vibrationsdämpfungsanordnung 50, die torsionsfrei verbunden sind.

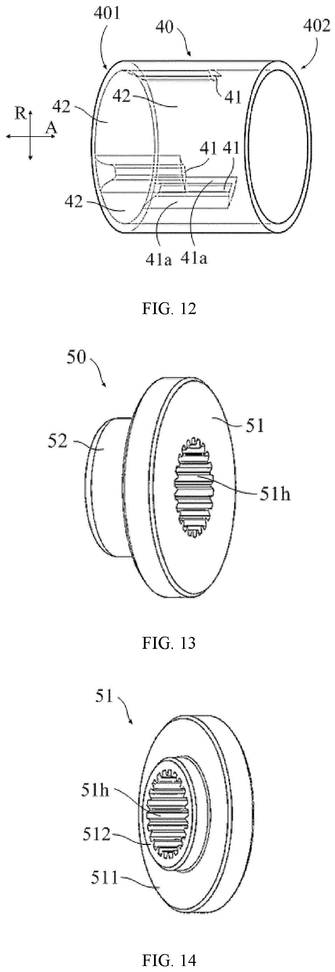

Unter Bezugnahme auf FIG. 1 (die strichpunktierte Doppelpunktlinie in FIG. 1 deutet die Gleitmuffe 40 an), FIG. 2 und FIG. 12 weist die Gleitmuffe 40 eine im Wesentlichen röhrenförmige Form auf. Ein erstes Ende 401 (ein linkes Ende in FIG. 12) der Gleitmuffe 40 in der axialen Richtung A ist mit dem ersten Verbinder M verbunden und ein zweite Ende 402 (ein rechtes Ende in FIG. 12) der Gleitmuffe 40 ist in axialer Richtung A mit der Vibrationsdämpfungsanordnung 50 verbunden.

Der innere Hohlraum der Gleitmuffe 40 ist am ersten Ende 401 mit drei in Umfangsrichtung gleichmäßig verteilten und radial nach innen vorstehenden Rippen 41 ausgebildet, wobei sich die vorstehenden Rippen 41 in axialer Richtung A erstrecken, um zwischen jeweils zwei benachbarten vorstehenden Rippen 41 eine Nut 42 zu bilden.

Zwei Seiten jeder vorstehenden Rippe 41 sind jeweils mit einer vertieften gewölbten Oberfläche 41 in der Umfangsrichtung ausgebildet und jede gewölbte Oberfläche 41a liegt an einer Reihe von Kugeln 32 an, die an einem Arm 312 montiert sind, mit anderen Worten, jede vorstehende Rippe 41 passt mit einem entsprechenden Arm 312 zusammen. Die vorstehende Rippe 41 weist eine Länge in der axialen Richtung A auf, die ungefähr gleich der Länge des Arms 312 ist.

Unter Bezugnahme auf die FIG. 1 und 11 ist der vorstehende Abschnitt der vorstehenden Rippe 41 relativ zu der Armaussparung 312a bereitgestellt und die Kugeln 32 liegen an der gewölbte Oberflächen 41a an; die Arme 312 weisen eine gewisse Elastizität in der radialen Richtung R auf, sodass, wenn der erste Verbinder M von dem ersten Ende 401 der Gleitmuffe 40 in die Gleitmuffe 40 eingesetzt wird, der Hakenabschnitt 31h durch die vorstehende Rippe 41 gedrückt wird, um elastisch radial und nach innen verformt zu werden, und der erste Verbinder M sich weiterhin in die Gleitmuffe 40 hinein erstreckt, bis die ringförmigen Vorsprünge 311a an der Endfläche der Gleitmuffe 40 an dem ersten Ende 401 anliegen, und an diesem Punkt der erste Verbinder M an Ort und Stelle montiert wird. Zu diesem Zeitpunkt gehen die Hakenabschnitte 31h gerade über den Bereich hinaus, der durch die vorstehenden Rippen 41 in der axialen Richtung A bedeckt ist, und werden radial und nach außen ausgestoßen, und daher werden die Arme 312 in ihre ursprüngliche Form zurückgebracht. Hakenabschnitte 31h haken in die Endfläche in der axialen Richtung der vorstehenden Rippen 41 weg von dem ersten Ende 401 derart ein, dass die ringförmigen Vorsprünge 311a und Hakenabschnitte 31h die Position der Käfiganordnung 30 und der Gleitmuffe 40 relativ zueinander an beiden Enden der axialen Richtung A definieren.

Zu diesem Zeitpunkt sind die Laufringanordnungen 20 in den Nuten 42 aufgenommen, die Laufringanordnungen 20 sind in der Umfangsrichtung durch die Kugeln 32 positioniert und die Kugeln 32 sind in der Umfangsrichtung durch die gewölbten Oberflächen 41a positioniert, wodurch die gegenseitige Positionierung des ersten Verbinders M und des zweiten Verbinders N in Umfangsrichtung realisiert wird.

Unter erneuter Bezugnahme auf FIG. 12 weist der innere Hohlraum der Gleitmuffe 40 keine vorstehenden Rippen 41 in der Nähe des zweiten Endes 402 auf, sondern bildet stattdessen eine glatte zylindrische Oberfläche.

Vorzugsweise kann der innere Hohlraum der Gleitmuffe 40 der vorstehend beschriebenen Struktur bearbeitet werden, zum Beispiel durch Bearbeiten der drei vorstehenden Rippen, die den inneren Hohlraum der Gleitmuffe 40 in axialer Richtung A durchdringen, wobei im inneren Hohlraum Rotationstiefziehen verwendet wird, und anschließendes Entfernen eines Teils der vorstehenden Rippen in der Nähe des zweiten Endes 402 durch maschinelles Bearbeiten, um die in FIG. 12 gezeigten vorstehenden Rippen 41 zu bilden.

Unter Bezugnahme auf FIG. 1 und 2 ist das zweite Ende 402 der Gleitmuffe 40 konfiguriert, um die Vibrationsdämpfungsanordnung 50 zu montieren. Die Vibrationsdämpfungsanordnung 50 umfasst einen Adapter 51, ein Schalengehäuse 52 und einen Puffer 53. Der Adapter 51 ist torsionsfrei mit der Gleitmuffe 40 verbunden.

Unter Bezugnahme auf die FIG. 13 und 14 umfasst der Adapter 51 einen Hauptkörper 511 und einen Vorsprung 512. Der Hauptkörper 511 weist die Form einer Scheibe auf, der zylindrische Vorsprung 512 ist konvex in der Mitte des Hauptkörpers 511 der Endfläche des ersten Endes 401 zugewandt ausgebildet, und der Vorsprung 512 ist zum Montieren des Schalengehäuses 52 konfiguriert. Der mittlere Abschnitt des Adapters 51 ist außerdem mit einer steckverzahnten Bohrung 51h versehen, die konfiguriert ist, um mit der Ausgangswelle des Motors des Lenkmechanismus verbunden zu werden. Zum Beispiel ist an der Ausgangswelle eine Außensteckverzahnung bereitgestellt, der mit der steckverzahnten Bohrung 51h zusammenpasst.

Vorzugsweise ist der Adapter 51 aus einem technischen Kunststoff hergestellt, der eine geeignete Verformbarkeit aufweist. Der Adapter 51 ist in den inneren Hohlraum der Gleitmuffe 40 eingebettet, und die torsionsfreie Verbindung zwischen dem Adapter 51 und der Gleitmuffe 40 wird durch eine Presspassung zwischen dem Grundkörper 511 und der Gleitmuffe 40 realisiert; und wenn die steckverzahnte Bohrung 51h mit der Außensteckverzahnung zusammenpasst, wird die steckverzahnte Bohrung 51h durch die Außensteckverzahnung leicht erweitert, wodurch eine spielfreie Passung zwischen dem Adapter 51 und der Außensteckverzahnung realisiert wird.

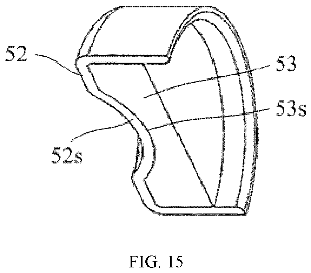

Unter Bezugnahme auf die FIG. 2 und 15 weist das Schalengehäuse 52 die Form einer Schale auf und ist zum Beispiel durch Stanzen gebildet. Das Schalengehäuse 52 ist auf den Vorsprung 512 des Adapters 51 geschoben und kann sich in einem kleinen Bereich in der axialen Richtung A relativ zum Vorsprung 512 bewegen (es wäre für den Leser einfacher, diesen kleinen Bewegungsbereich zu verstehen, wenn nachstehend ein Spalt G beschrieben wird). In axialer Richtung A ist in dem inneren Hohlraum des Schalengehäuses 52 oder eigentlich zwischen dem Schalengehäuse 52 und dem Adapter 51 ein Puffer 53 bereitgestellt. Der Puffer 53 ist zum Beispiel aus Gummi hergestellt und der Gummipuffer 53 ist in den inneren Hohlraum des Schalengehäuses 52 eingeformt, zum Beispiel durch einen Vulkanisierungsprozess.

Wenn das Schalengehäuse 52 auf den Vorsprung 512 geschoben wird, liegt der Vorsprung 512 im Anfangszustand an dem Puffer 53 an, aber das Schalengehäuse 52 liegt nicht an dem Hauptkörper 511 an, das heißt, es ist ein Spalt G in der axialen Richtung A zwischen dem Schalengehäuse 52 und dem Hauptkörper 511 vorhanden (siehe FIG. 2). Der Puffer 53 kann sich in axialer Richtung A elastisch verformen, sodass die Welle 11 in axialer Richtung A relativ zu dem Adapter 51 innerhalb eines kleinen Bereichs verschoben werden kann.

Der mittlere Abschnitt des Schalengehäuses 52, der der Endfläche der Welle 11 in der axialen Richtung A zugewandt ist, ist vertieft, um einen konkaven Kugelabschnitt 52s in Form einer sphärischen Oberfläche und dementsprechend bildet ein elastisches Element, das eng an dem Schalengehäuse 52 anliegt, auch einen kugelförmigen konkaven Abschnitt 53s an einer entsprechenden Position. Der konkave Kugelabschnitt 52s ist so konfiguriert, dass er an der sphärischen Oberfläche 11s der Welle 11 anliegt. Vorzugsweise ist der Radius der Kugel, die der sphärischen Oberfläche 11s entspricht, etwas kleiner als der Radius der Kugel, die dem konkaven Kugelabschnitt 52s entspricht.

Die sphärische Oberfläche 11s liegt an dem konkaven Kugelabschnitt 52s an, sodass, wenn die Welle 11 relativ zu der axialen Richtung A versetzt ist, der konkave Kugelabschnitt 52s immer noch eine effektive Zentrierung auf der Welle 11 erreichen kann.

Wenn dementsprechend der erste Verbinder M und der zweite Verbinder N in der axialen Richtung A als ein Verbindungsende der Kupplung verbunden sind, liegt die Welle 11 an einer Seite an dem Schalengehäuse 52 an und wird dadurch relativ zum zweiten Verbinder N begrenzt, und die Welle 11 wird durch die Laufringanordnungen 20, die mit der Welle 11 verbunden sind (die Laufringanordnungen 20 werden durch den Käfigkörper 31 in der axialen Richtung A begrenzt) auf der anderen Seite begrenzt und wird dadurch relativ zur ersten Verbinder M begrenzt.

Unter erneuter Bezugnahme auf die FIG. 1 und 2 werden die Selbstausrichtungs- und Vibrationsdämpfungsfähigkeiten der Kupplung gemäß der vorliegenden Erfindung beschrieben. Ist das axiale Spiel eines auf einer Seite der Schnecke befindlichen Pendellagers zum Zeitpunkt des Umkehrens der Lenkung zu klein, wechseln das Schneckenrad und die Schnecke vom Eingriff in einem Haftreibungszustand in einen Gleitreibungszustand, was zu einem plötzlichen Anstieg und einem plötzlichen Abfall des Reibmoments führt. Eine Möglichkeit, diesen plötzlichen Anstieg oder plötzlichen Abfall des Reibungsdrehmoments zu vermeiden oder abzumildern, besteht darin, das Axialspiel des Pendellagers zu erhöhen, was zu einer Axialbeschleunigung zwischen Teilen des Lagers führt, wobei dann die durch die Axialbeschleunigung verursachte Vibration durch die Kupplung gemäß der vorliegenden Erfindung absorbiert werden kann.

Wenn zum Beispiel die durch das selbstausrichtende Lager erzeugte Axialbeschleunigung auf die Welle 11 übertragen wird, liegt die Welle 11 an der Vibrationsdämpfungsanordnung 50 an, sodass der Stoß der Welle 11 an das Schalengehäuse 52 durch den Puffer 53 absorbiert wird.

Außerdem wird der Abstand zwischen den Zähnen des Schneckenrads größer, wenn das Schneckenrad unter hohem Drehmoment verschleißt, was bewirkt, dass die mit dem Schneckenrad in Eingriff stehende Schnecke vibriert und in alle Richtungen versetzt wird. Die Vibration kann durch die Kupplung gemäß der Erfindung absorbiert werden, und der Versatz kann durch die Kupplung gemäß der Erfindung angepasst werden.

Wenn zum Beispiel die Achse der Welle 11 relativ zu der Gleitmuffe 40 versetzt ist (dieser Versatz kann mit einer axialen Verschiebung der Welle 11 relativ zu der Gleitmuffe 40 und/oder einer Auslenkung der Welle 11 relativ zu der Gleitmuffe 40 in Umfangsrichtung einhergehen), drückt der Kugelring 13 auf den inneren Laufring 22, sodass sich der Abstand zwischen dem inneren Laufring 22 und dem äußeren Laufring 23 ändert, und die durch die Abstandsänderung erzeugte Vibration kann durch das elastische Element 24 absorbiert werden. Wenn die Laufringanordnungen 20 relativ zu der Käfiganordnung 30 versetzt sind, rollen die sechs Reihen von Kugeln 32 auf der Käfiganordnung 30 relativ zu den gekrümmten Oberflächen 23a von sechs äußeren Laufringen, die auf den drei Laufringanordnungen 20 angeordnet sind, sodass ein plötzlicher Anstieg und ein plötzlicher Abfall der Reibung weniger wahrscheinlich sind.

Schließlich wird ein Montageverfahren für eine Kupplung mit drei Kugelbolzen gemäß der vorliegenden Erfindung wie folgt eingeführt.

Ein innerer Laufring 22, ein äußerer Laufring 23 und ein elastisches Element 24 sind an einem Laufringrahmen 21 montiert, um eine Laufringanordnung 20 zu bilden. Danach werden drei Laufringanordnungen 20 an einer Bolzenanordnung 10 mit drei Wellen montiert, um ein Universalschwenkmodul mit drei Bolzen zu bilden.

Ein Schalengehäuse 52 mit einem Puffer 53 ist mit einem Adapter 51 verbunden, um eine Vibrationsdämpfungsanordnung 50 zu bilden.

Kugeln 32 werden in Kugeltaschen 31b eines Käfigkörpers 31 montiert, um eine Käfiganordnung 30 zu bilden.

Die Vibrationsdämpfungsanordnung 50 wird mittels Presspassung an einer Gleitmuffe 40 montiert; dann treibt die Käfiganordnung 30 das Universalschwenkmodul mit drei Bolzen in einer axialen Richtung A in die Gleitmuffe 40; und wenn ein Hakenabschnitt 31h und ein ringförmiger Vorsprung 311a der Käfiganordnung 30 an der Gleitmuffe 40 an Ort und Stelle angebracht werden und die Welle 11 an dem Schalengehäuse 52 anliegt, ist die Montage abgeschlossen.

Es versteht sich, dass die Reihenfolge der Ausführung jedes Teilschritts der vorstehend beschriebenen Anordnung angepasst werden kann.

Einige der vorteilhaften Wirkungen der vorstehenden Ausführungsformen der vorliegenden Erfindung werden nachstehend kurz beschrieben.
(i) Ein erster Verbinder M einer Kupplung mit drei Kugelbolzen gemäß der vorliegenden Erfindung verwendet eine Bolzenanordnung 10 mit drei Wellen, ein Kugelring 13 der Bolzenanordnung 10 mit drei Wellen bildet eine sphärische Passung mit einem inneren Laufring 22 einer Laufringanordnung 20 und die einer Laufringanordnung 20 passt in eine Gleitmuffe 40 eines zweiten Verbinders N, wodurch eine universelle Schwingung des ersten Verbinders M relativ zum zweiten Verbinder N erreicht wird. Wenn ein Versatz um einen großen Winkel (z. B. ±1,5°) zwischen dem ersten Verbinder M und dem zweiten Verbinder N auftritt, kann dennoch ein Drehmoment zwischen dem ersten Verbinder M und dem zweiten Verbinder N übertragen werden. Mit anderen Worten, der Versatzwinkel der Schnecke kann auch unter hoher Belastung dynamisch kompensiert werden, zum Beispiel, wenn das Schneckenrad aus Kunststoff stark verschlissen ist und die Schneckenachse stark versetzt ist.
(ii) Die Laufringanordnung 20 weist eine nicht lineare wellenförmige Feder 241 auf, die zwei Seiten aufweist, die den inneren Laufring 22 und den äußeren Laufring 23 flexibel fixieren, und die drei Laufringanordnungen 20 sind um die Bolzenanordnung 10 mit drei Wellen herum angeordnet, sodass eine spielfreie Übertragung zwischen dem ersten Verbinder M und dem zweiten Verbinder N in Umfangsrichtung realisierbar ist. Das elastische Element 24 kann die Toleranz kompensieren, und dies stellt nicht nur die Übertragungssteifigkeit sicher, sondern senkt die Toleranzanforderungen für die Produktion verwandter Teile, um die Robustheit der Produktion zu verbessern, wodurch Spiel und Vibrationsstöße beim Rückwärtsfahren vermieden werden, indem die Anforderungen für eine lückenlose Drehmomentübertragung zwischen Übertragungselementen erfüllt werden.
(iii) Eine Käfiganordnung 30 weist schwimmende Kugeln 32 auf und die Kugeln 32 bilden ein lineares Laufringpaar mit der Gleitmuffe 40 und dem äußeren Laufring 23, wodurch ein plötzlicher Anstieg und plötzlicher Abfall der Reibung während der Übertragung beseitigt wird. Darüber hinaus ist die Verarbeitung und Montage der Kugeln 32 und eines Käfigkörpers 31 technisch einfach zu realisieren, da die Kugeln 32 zunächst am Käfigkörper 31 montiert und dann zusammen mit dem Käfigkörper 31 in den inneren Hohlraum der Gleitmuffe 40 montiert werden können.
(iv) Der zweite Verbinder N der Kupplung mit drei Kugelbolzen gemäß der vorliegenden Erfindung umfasst eine Vibrationsdämpfungsanordnung 50, sodass die Übertragungselemente keiner axialen Vibration ausgesetzt werden, und die Anforderung zum Steuern des Axialspiels des selbstausrichtenden Lagers des Lenkgetriebes abgesenkt werden.
(v) Der Lenkmechanismus gemäß der vorliegenden Erfindung neigt nicht zu Spiel und Vibrationsstoß beim Rückwärtsfahren sowie einem Systemstoß aufgrund von Reibungsschwankungen während des Vorgangs des Umkehrens von Rückwärts- und Vorwärtsfahrt und des kontinuierlichen Startens und Stoppens.

Es versteht sich, dass die vorstehenden Ausführungsformen lediglich beispielhaft sind und die vorliegende Erfindung nicht einschränken sollen. Fachleute können verschiedene Modifikationen und Änderungen an den vorstehenden Ausführungsformen gemäß der Lehre der vorliegenden Erfindung vornehmen, ohne vom Schutzumfang der vorliegenden Erfindung abzuweichen. Zum Beispiel:
(i) muss der Adapter 51 kein in die Gleitmuffe 40 eingebetteter Einsatz sein, sondern kann mit der Gleitmuffe 40 zum Beispiel durch eine Schraubverbindung, eine Gewindeverbindung oder Schmelzschweißen verbunden sein;
(ii) kann das Gelenk 12 mit drei Bolzen als integraler Bestandteil der Welle 11 ausgebildet sein;
(iii) kann der Laufringrahmen 21 in anderen Rahmenformen vorliegen und ist nicht auf die hierin beschriebene Form beschränkt; und
(iv) müssen die beiden wellenförmigen Federn 241 derselben Laufringanordnung 20 nicht durch den Verbindungsabschnitt 242 verbunden sein, wodurch sie zwei unabhängige elastische Elemente bilden.

### LISTE DER BEZUGSZEICHEN

- M.: erster Verbinder;
- N.: zweiter Verbinder;
- 10.: Bolzenanordnung mit drei Wellen;
- 11.: Welle;
- 11s.: sphärische Oberfläche;
- 11h.: Bolzenbohrung;
- 12.: Gelenk mit drei Bolzen;
- 12n.: Zapfen;
- 13.: Kugelring;
- 20.: Laufringanordnung;
- 20s.: Kugelringmontageabschnitt;
- 21.: Laufringrahmen;
- 211.: Seitenrahmen;
- 211a.: Taschenkante;
- 212.: Verbindungsstange;
- 22.: innerer Laufring;
- 22s.: sphärische konkave Oberfläche;
- 23.: äußerer Laufring;
- 23a.: gekrümmte Oberfläche;
- 24.: elastisches Element;
- 241.: wellenförmige Feder;
- 242.: Verbindungsabschnitt;
- 30.: Käfiganordnung;
- 31.: Käfigkörper;
- 311.: ringförmiger Abschnitt;
- 311a.: ringförmiger Vorsprung;
- 312.: Arm;
- 312a.: Armaussparung;
- 31b.: Kugeltasche;
- 31h.: Hakenabschnitt;
- 32.: Kugel;
- 40.: Gleitmuffe;
- 401.: erstes Ende;
- 402.: zweites Ende;
- 41.: vorstehende Rippe;
- 41a.: gewölbte Oberfläche;
- 42.: Nut;
- 50.: Vibrationsdämpfungsanordnung;
- 51.: Adapter;
- 511.: Hauptkörper;
- 512.: Vorsprung;
- 51h.: steckverzahnte Bohrung;
- 52.: Schalengehäuse;
- 52s.: konkaver Kugelabschnitt;
- 53.: Puffer;
- 53s.: konkaver Kugelabschnitt;
- A.: axiale Richtung;
- R.: radiale Richtung;
- G.: Spalt.

## Patentansprüche

1. Kupplung mit drei Kugelbolzen, umfassend einen ersten Verbinder (M) und einen zweiten Verbinder (N), die drehfest verbunden sind, wobei
der erste Verbinder (M) eine Bolzenanordnung mit drei Wellen (10), Laufringanordnungen (20) und eine Käfiganordnung (30) umfasst;
die Bolzenanordnung (10) mit drei Wellen eine Welle (11) und drei Kugelringe (13) umfasst, die die Welle (11) umgeben und in Umfangsrichtung der Welle (11) in Abständen angeordnet sind; drei Laufringanordnungen (20) vorhanden sind; jeder Kugelring (13) mit einer der Laufringanordnungen (20) verbunden ist; die Käfiganordnung (30) die Position der Laufringanordnungen (20) in Umfangsrichtung definiert;
die Laufringanordnungen (20) eine elastische Kraft zwischen dem Kugelring (13) und der Käfiganordnung (30) bereitstellen können; und wenn sich der Kugelring (13) relativ zu der Käfiganordnung (30) in Umfangsrichtung verschiebt, zwei Seiten der Laufringanordnung (20) in Umfangsrichtung an der Käfiganordnung (30) weiterhin anliegen,
**dadurch gekennzeichnet, dass** die Käfiganordnung (30) einen Käfigkörper (31) und Kugeln (32) umfasst;
der Käfigkörper (31) einen ringförmigen Abschnitt (311) und drei Arme (312) umfasst, die mit dem ringförmigen Abschnitt (311) verbunden sind; die Arme (312) sich entlang einer axialen Richtung (A) des ringförmigen Abschnitts (311) erstrecken; zwei Seiten der Arme (312) in Umfangsrichtung mit mehreren eingekerbten Kugeltaschen (31b) ausgebildet sind;
die Kugeln (32) in den Kugeltaschen (31b) untergebracht sind und in der Lage sind, relativ zu den Kugeltaschen (31b) innerhalb der Kugeltaschen (31b) zu rollen;
jeder der Arme (312) zwischen zwei der Laufringanordnungen (20) eingesetzt ist; und die Kugeln (32) an den Laufringanordnungen (20) anliegen.

2. Kupplung mit drei Kugelbolzen nach Anspruch 1, **dadurch gekennzeichnet, dass** die Laufringanordnungen (20) Laufringrahmen (21), innere Laufringe (22), äußere Laufringe (23) und elastische Elemente (24) umfassen;
jeder der Laufringrahmen (21) mit zwei inneren Laufringen (22) und zwei äußeren Laufringen (23) versehen ist; zwei der inneren Laufringe (22) voneinander beabstandet sind, um dazwischen einen Kugelringmontageabschnitt (20s) zu bilden; einer der äußeren (23) Laufringe auf einer Seite jedes der inneren Laufringe (22) entfernt von dem Kugelringmontageabschnitt (20s) montiert ist; ein innerer Laufring (22) und ein äußerer Laufring (23), die auf derselben Seite des Kugelringmontageabschnitts (20s) angeordnet sind, ein Laufringpaar bilden;
das elastische Element (24) mindestens teilweise zwischen dem inneren Laufring (22) und dem äußeren Laufring (23) bereitgestellt ist; und das elastische Element (24) an dem inneren Laufring (22) und dem äußeren Laufring (23) jedes der Laufringpaare anliegt.

3. Kupplung mit drei Kugelbolzen nach Anspruch 2, **dadurch gekennzeichnet, dass**, wenn der Kugelring (13) genau in der Mitte von zwei der äußeren Laufringe (23) angeordnet ist, das elastische Element (24) durch den inneren Laufring (22) und den äußeren Laufring (23) zusammengedrückt und dadurch elastisch verformt wird.

4. Kupplung mit drei Kugelbolzen nach Anspruch 2, **dadurch gekennzeichnet, dass** sich während einer elastischen Verformung des elastischen Elements (24) ein Steifigkeitskoeffizient des elastischen Elements (24) ändert.

5. Kupplung mit drei Kugelbolzen nach Anspruch 4, **dadurch gekennzeichnet, dass** ein Abschnitt des elastischen Elements (24) zwischen dem inneren Laufring (22) und dem äußeren Laufring (23) mindestens teilweise wellenförmig ist.

6. Kupplung mit drei Kugelbolzen nach Anspruch 5, **dadurch gekennzeichnet, dass** das elastische Element (24) insgesamt U-förmig ist; das elastische Element (24) einen Verbindungsabschnitt (242) und zwei wellenförmige Federn (241) umfasst, die mit zwei Enden des Verbindungsabschnitts (242) verbunden sind; und
zwei der wellenförmigen Federn (241) jeweils zwischen dem inneren Laufring (22) und dem äußeren Laufring (23) eines der Laufringpaare eingesetzt sind.

7. Kupplung mit drei Kugelbolzen nach Anspruch 2, **dadurch gekennzeichnet, dass** eine Seite des inneren Laufrings (22), die dem Kugelringmontageabschnitt (20s) zugewandt ist, teilweise vertieft ist, um eine sphärische konkave Oberfläche (22s) zu bilden, die Teil einer sphärischen Oberfläche ist und mit dem Kugelregen (13) in Kontakt steht.

8. Kupplung mit drei Kugelbolzen nach Anspruch 2, **dadurch gekennzeichnet, dass** eine Seite des äußeren Laufrings (23), die von dem Kugelringmontageabschnitt (20s) abgewandt ist, teilweise vertieft ist, um eine gekrümmte Oberfläche (23a) in Kontakt mit der Käfiganordnung (30) zu bilden.

9. Kupplung mit drei Kugelbolzen nach Anspruch 1, **dadurch gekennzeichnet, dass** ein mittlerer Abschnitt jedes der Arme (312), der sich in der Umfangsrichtung zwischen zwei Reihen der Kugeltaschen (31b) befindet, radial und nach innen vertieft ist, um eine Armaussparung (312a) zu bilden.

10. Kupplung mit drei Kugelbolzen nach Anspruch 1, **dadurch gekennzeichnet, dass** das zweite Verbindungsstück (N) eine röhrenförmige Gleitmuffe (40) umfasst, die ein erstes Ende (401) in der axialen Richtung (A) aufweist, das mit dem ersten Verbindungsstück (M) verbunden ist;
ein innerer Hohlraum der Gleitmuffe (40) drei vorstehende Rippen (41) in axialer Richtung (A) nahe dem ersten Ende (401) umfasst, die radial und nach innen vorstehen und in Umfangsrichtung beabstandet sind; die vorstehenden Rippen (41) sich in axialer Richtung (A) erstrecken, um eine Nut (42) zwischen jeweils zwei benachbarten vorstehenden Rippen (41) zu bilden;
die Arme (312) mit den vorstehenden Rippen (41) in Umfangsrichtung ausgerichtet sind; die Kugeln (32) an den vorstehenden Rippen (41) anliegen; und jede der Laufringanordnungen (20) in einer der Nuten (42) aufgenommen ist.

11. Kupplung mit drei Kugelbolzen nach Anspruch 10, **dadurch gekennzeichnet, dass** zwei Seiten jeder der vorstehenden Rippen (41) in der Umfangsrichtung jeweils mit einer vertieften gewölbten Oberfläche (41a) ausgebildet sind und die Kugeln (32) an den gewölbten Oberflächen (41a) anliegen.

12. Kupplung mit drei Kugelbolzen nach Anspruch 10, **dadurch gekennzeichnet, dass** ein Hakenabschnitt (31H), der in einer radialen Richtung des ringförmigen Abschnitts (311) nach außen vorsteht, an dem Ende des Arms (312) weg von dem ringförmigen Abschnitt (311) ausgebildet ist und
der Hakenabschnitt (31H) in die vorstehende Rippe (41) einhakt, um zu verhindern, dass sich die Käfiganordnung (30) von dem ersten Ende (401) löst.

13. Kupplung mit drei Kugelbolzen nach Anspruch 10, **dadurch gekennzeichnet, dass** ein äußerer Umfangsabschnitt des ringförmigen Abschnitts (311) mehrere ringförmige Vorsprünge (311a) umfasst, die radial und nach außen vorstehen, und die ringförmigen Vorsprünge (311a) an einer Endfläche der Gleitmuffe (40) an dem ersten Ende (401) anliegen, um die Käfiganordnung (30) in der axialen Richtung (A) zu begrenzen.

14. Kupplung mit drei Kugelbolzen nach Anspruch 10, **dadurch gekennzeichnet, dass** der innere Hohlraum der Gleitmuffe (40) an einem zweiten Ende (402) entfernt von dem ersten Ende (401) keine vorstehenden Rippen (41) in axialer Richtung (A) aufweist;
der zweite Verbinder (N) ferner eine Vibrationsdämpfungsanordnung (50) umfasst, die an dem zweiten Ende (402) relativ zu der Gleitmuffe (40) drehfest montiert ist; die Vibrationsdämpfungsanordnung (50) sich mindestens teilweise in den inneren Hohlraum der Gleitmuffe (40) erstreckt;
die Welle (11) an der Vibrationsdämpfungsanordnung (50) anliegt, ein axiales Ende der Welle (11) nahe der Vibrationsdämpfungsanordnung (50) eine sphärische Oberfläche (11s) bildet; und ein Abschnitt der Vibrationsdämpfungsanordnung (50), der in Kontakt mit der Welle (11) steht, als sphärische Oberfläche geformt ist.

15. Kupplung mit drei Kugelbolzen nach Anspruch 14, **dadurch gekennzeichnet, dass** die Vibrationsdämpfungsanordnung (50) einen Adapter (51), ein Schalengehäuse (52) und einen Puffer (53) umfasst;
der Adapter (51) und die Gleitmuffe (40) drehfest miteinander verbunden sind;
das Schalengehäuse (52) mit dem Adapter (51) verbunden ist; der Puffer (53) zwischen dem Schalengehäuse (52) und dem Adapter (51) bereitgestellt ist;
ein Abschnitt der Welle (11), der in Kontakt mit der Vibrationsdämpfungsanordnung (50) steht, sich an dem Schalengehäuse (52) befindet; und ein Abschnitt des Schalengehäuses (52), der in Kontakt mit der Welle (11) steht, einen vertieften konkaven Kugelabschnitt (52s) in Form einer sphärischen Oberfläche bildet.

16. Kupplung mit drei Kugelbolzen nach Anspruch 15, **dadurch gekennzeichnet, dass** ein innerer Umfangsabschnitt des Adapters (51) eine steckverzahnte Bohrung (51h) bildet.

17. Kupplung mit drei Kugelbolzen nach Anspruch 15, **dadurch gekennzeichnet, dass** der Adapter (51) in den inneren Hohlraum der Gleitmuffe (40) eingebettet ist;
ein mittlerer Abschnitt der der Welle (11) zugewandten Endfläche des Adapters (51) einen Vorsprung (512) bildet, indem er in Richtung der Welle (11) vorsteht; und das Schalengehäuse (52) so auf den Vorsprung (512) aufgeschoben ist, dass das Schalengehäuse relativ zu dem Vorsprung axial beweglich ist.

18. Kupplung mit drei Kugelbolzen nach Anspruch 17, **dadurch gekennzeichnet, dass** bei nicht zusammengedrücktem Puffer (53) ein Spalt (G) zwischen dem Schalengehäuse (52) und der der Welle (11) zugewandten Endfläche des Adapters (51) vorhanden ist.

19. Lenkmechanismus, umfassend einen Motor, eine Kupplung und eine Schneckenrad- und Schneckenanordnung, **dadurch gekennzeichnet, dass** die Kupplung eine Kupplung mit drei Kugelbolzen nach einem der Ansprüche 1 bis 18 ist;
das erste Verbindungsstück (M) der Kupplung mit drei Kugelbolzen und eine Schnecke der Schneckenrad- und Schneckenanordnung drehfest verbunden sind; und der zweite Verbinder (N) der Kupplung mit drei Kugelbolzen und eine Ausgangswelle des Motors drehfest verbunden sind.

## Claims

1. A three ball stud-type coupling, comprising a first connector (M) and a second connector (N), which are non-rotatably connected, wherein
the first connector (M) comprises a stud assembly with three shafts (10), race assemblies (20) and a cage assembly (30);
the three-shaft stud assembly (10) comprises a shaft (11) and three ball rings (13) surrounding the shaft (11) and spaced apart in the circumferential direction of the shaft (11); three race assemblies (20) are provided; each ball ring (13) is connected to one of the race assemblies (20); the cage assembly (30) defines the circumferential position of the race assemblies (20);
the race assemblies (20) can provide an elastic force between the ball ring (13) and the cage assembly (30); and when the ball ring (13) shifts relative to the cage assembly (30) in the circumferential direction, two sides of the race assembly (20) continue to bear against the cage assembly (30) in the circumferential direction,
**characterised in that** the cage assembly (30) comprises a cage body (31) and balls (32);
the cage body (31) comprises an annular section (311) and three arms (312) connected to the annular section (311); the arms (312) extend along an axial direction (A) of the annular section (311); two sides of the arms (312) are formed with a plurality of notched ball pockets (31b) in the circumferential direction;
the balls (32) are accommodated in the ball pockets (31b) and are capable of rolling relative to the ball pockets (31b) within the ball pockets (31b);
each of the arms (312) is inserted between two of the race assemblies (20); and the balls (32) bear against the race assemblies (20).

2. The three ball stud-type coupling according to claim 1, **characterised in that** the race assemblies (20) comprise race frames (21), inner races (22), outer races (23) and elastic elements (24);
each of the race frames (21) is provided with two inner races (22) and two outer races (23); two of the inner races (22) are spaced apart from each other to form a ball ring mounting section (20s) therebetween; one of the outer races (23) is mounted on one side of each of the inner races (22) spaced apart from the ball ring mounting section (20s); an inner race (22) and an outer race (23) arranged on the same side of the ball ring mounting section (20s) form a race pair;
the elastic element (24) is provided at least partially between the inner race (22) and the outer race (23); and the elastic element (24) bears against the inner race (22) and the outer race (23) of each of the race pairs.

3. The three ball stud-type coupling according to claim 2, **characterised in that** when the ball ring (13) is arranged exactly in the middle of two of the outer races (23), the elastic element (24) is compressed by the inner race (22) and the outer race (23) and is thereby elastically deformed.

4. The three ball stud-type coupling according to claim 2, **characterised in that** a stiffness coefficient of the elastic element (24) changes during an elastic deformation of the elastic element (24).

5. The three ball stud-type coupling according to claim 4, **characterised in that** a section of the elastic element (24) between the inner race (22) and the outer race (23) is at least partially wave-shaped.

6. The three ball stud-type coupling according to claim 5, **characterised in that** the elastic element (24) is U-shaped overall; the elastic element (24) comprises a connecting section (242) and two wave-shaped springs (241) connected to two ends of the connecting section (242); and
two of the wave-shaped springs (241) are each inserted between the inner race (22) and the outer race (23) of one of the race pairs.

7. The three ball stud-type coupling according to claim 2, **characterised in that** a side of the inner race (22) facing the ball ring mounting section (20s) is partially recessed to form a spherical concave surface (22s) which is part of a spherical surface and is in contact with the ball rings (13).

8. The three ball stud-type coupling according to claim 2, **characterised in that** a side of the outer race (23) facing away from the ball ring mounting section (20s) is partially recessed to form a curved surface (23a) in contact with the cage assembly (30).

9. The three ball stud-type coupling according to claim 1, **characterised in that** a central section of each of the arms (312) located in the circumferential direction between two rows of the ball pockets (31b) is recessed radially and inwardly to form an arm recess (312a).

10. The three ball stud-type coupling according to claim 1, **characterised in that** the second connecting piece (N) comprises a tubular sliding sleeve (40) having a first end (401) in the axial direction (A) connected to the first connecting piece (M);
an inner cavity of the sliding sleeve (40) comprises three projecting ribs (41) in the axial direction (A) near the first end (401), which project radially and inwardly and are spaced apart in the circumferential direction; the projecting ribs (41) extend in the axial direction (A) to form a groove (42) between each two adjacent projecting ribs (41);
the arms (312) are circumferentially aligned with the projecting ribs (41); the balls (32) bear against the projecting ribs (41); and each of the race assemblies (20) is received in one of the grooves (42).

11. The three=ball stud-type coupling according to claim 10, **characterised in that** two sides of each of the projecting ribs (41) in the circumferential direction are each formed with a depressed curved surface (41a), and the balls (32) bear against the curved surfaces (41a).

12. The three=ball stud-type coupling according to claim 10, **characterised in that** a hook section (31H) projecting outward in a radial direction of the annular section (311) is formed at the end of the arm (312) away from the annular section (311), and
the hook section (31H) hooks into the projecting rib (41) to prevent the cage assembly (30) from detaching from the first end (401).

13. The three ball stud-type coupling according to claim 10, **characterised in that** an outer peripheral section of the annular section (311) includes a plurality of annular projections (311a) projecting radially and outwardly, and the annular projections (311a) bear against an end surface of the sliding sleeve (40) at the first end (401) to delimit the cage assembly (30) in the axial direction (A).

14. The three ball stud-type coupling according to claim 10, **characterised in that** the inner cavity of the sliding sleeve (40) has no projecting ribs (41) in the axial direction (A) at a second end (402) spaced apart from the first end (401);
the second connector (N) further comprises a vibration-damping assembly (50) non-rotatably mounted at the second end (402) relative to the sliding sleeve (40); the vibration-damping assembly (50) extends at least partially into the interior cavity of the sliding sleeve (40);
the shaft (11) bears against the vibration-damping assembly (50), an axial end of the shaft (11) near the vibration-damping assembly (50) forms a spherical surface (11s); and a section of the vibration-damping assembly (50) which is in contact with the shaft (11) is shaped as a spherical surface.

15. The three ball stud-type coupling according to claim 14, **characterised in that** the vibration-damping assembly (50) comprises an adapter (51), a shell housing (52) and a buffer (53);
the adapter (51) and the sliding sleeve (40) are non-rotatably connected to each other;
the shell housing (52) is connected to the adapter (51); the buffer (53) is provided between the shell housing (52) and the adapter (51);
a section of the shaft (11) which is in contact with the vibration-damping assembly (50) is located on the shell housing (52); and a section of the shell housing (52) which is in contact with the shaft (11) forms a recessed concave ball section (52s) in the shape of a spherical surface.

16. The three ball stud-type coupling according to claim 15, **characterised in that** an inner peripheral section of the adapter (51) forms an interlocking bore (51h).

17. The three ball stud-type coupling according to claim 15, **characterised in that** the adapter (51) is embedded in the inner cavity of the sliding sleeve (40);
a central section of the end surface of the adapter (51) facing the shaft (11) forms a projection (512) by projecting in the direction of the shaft (11); and the shell housing (52) is pushed onto the projection (512) such that the shell housing is axially movable relative to the projection.

18. The three ball stud-type coupling according to claim 17, **characterised in that**, when the buffer (53) is not compressed, a gap (G) exists between the shell housing (52) and the end surface of the adapter (51) facing the shaft (11).

19. A steering mechanism comprising a motor, a coupling, and a worm gear and worm assembly, **characterised in that** the coupling is a three ball stud-type coupling according to any one of claims 1 to 18;
the first connector (M) of the three ball stud-type coupling and a worm of the worm gear and worm assembly are non-rotatably connected; and the second connector (N) of the three ball stud-type coupling and an output shaft of the motor are non-rotatably connected.

## Revendications

1. Accouplement du type broche à trois billes, comprenant un premier raccord (M) et un second raccord (N) qui sont reliés de manière fixe en rotation, dans lequel
le premier raccord (M) comprend un agencement de boulons comportant trois arbres (10), des agencements de chemins de roulement (20) et un agencement de cage (30) ;
l'agencement de boulon (10) comportant trois arbres comprend un arbre (11) et trois chemins à billes (13), qui sont agencés de façon à entourer l'arbre (11) et espacés dans la direction circonférentielle de l'arbre (11) ; trois agencements de chemins de roulement (20) sont prévus ; chaque chemin à billes (13) est relié à l'un des agencements de chemins de roulement (20) ; l'agencement de cage (30) définit la position dans la direction circonférentielle des agencements de chemins de roulement (20) ;
les agencements de chemins de roulement (20) peuvent fournir une force élastique entre le chemin à billes (13) et l'agencement de cage (30) ; et lorsque le chemin à billes (13) se déplace dans la direction circonférentielle par rapport à l'agencement de cage (30), deux côtés de l'agencement de chemins de roulement (20) continuent de s'appuyer dans la direction circonférentielle contre l'agencement de cage (30),
**caractérisé en ce que** l'agencement de cage (30) comprend un corps de cage (31) et des billes (32) ;
le corps de cage (31) comprend une section de forme annulaire (311) et trois bras (312) qui sont reliés à la section de forme annulaire (311) ; les bras (312) s'étendent le long d'une direction axiale (A) de la section de forme annulaire (311) ; deux côtés des bras (312) sont réalisés dans la direction circonférentielle avec une pluralité de poches à billes crantées (31b) ;
les billes (32) sont logées dans les poches à billes (31b) et sont aptes à rouler par rapport aux poches à billes (31b) à l'intérieur des poches à billes (31b) ;
chacun des bras (312) est inséré entre deux des agencements de chemins de roulement (20) ; et les billes (32) s'appuient contre les agencements de chemins de roulement (20).

2. Accouplement du type broche à trois billes selon la revendication 1, **caractérisé en ce que** les agencements de chemins de roulement (20) comprennent des cadres de chemin de roulement (21), des chemins de roulement intérieurs (22), des chemins de roulement extérieurs (23) et des éléments élastiques (24) ;
chacun des cadres de chemin de roulement (21) est pourvu de deux chemins de roulement intérieurs (22) et de deux chemins de roulement extérieurs (23) ; deux des chemins de roulement intérieurs (22) sont espacés l'un de l'autre pour former entre eux une section de montage de chemin de roulement à billes (20s) ; l'un des chemins de roulement extérieurs (23) est monté sur un côté de chacun des chemins de roulement intérieurs (22) éloigné de la section de montage de chemin de roulement à billes (20s) ; un chemin de roulement intérieur (22) et un chemin de roulement extérieur (23) qui sont agencés sur le même côté de la section de montage de chemin de roulement à billes (20s) forment une paire de chemins de roulement ;
l'élément élastique (24) est prévu au moins partiellement entre le chemin de roulement intérieur (22) et le chemin de roulement extérieur (23) ; et l'élément élastique (24) s'appuie contre le chemin de roulement intérieur (22) et le chemin de roulement extérieur (23) de chacune des paires de chemins de roulement.

3. Accouplement du type broche à trois billes selon la revendication 2, **caractérisé en ce que**, lorsque le chemin de roulement à billes (13) est agencé exactement au milieu de deux des chemins de roulement extérieurs (23), l'élément élastique (24) est comprimé par le chemin de roulement intérieur (22) et le chemin de roulement extérieur (23) et il est ainsi déformé élastiquement.

4. Accouplement du type broche à trois billes selon la revendication 2, **caractérisé en ce qu'**un coefficient de rigidité de l'élément élastique (24) change lors d'une déformation élastique de l'élément élastique (24).

5. Accouplement du type broche à trois billes selon la revendication 4, **caractérisé en ce qu'**une partie de l'élément élastique (24) entre le chemin de roulement intérieur (22) et le chemin de roulement extérieur (23) est au moins partiellement de forme ondulée.

6. Accouplement du type broche à trois billes selon la revendication 5, **caractérisé en ce que** l'élément élastique (24) a une forme générale en U ; l'élément élastique (24) comprend une section de raccordement (242) et deux ressorts de forme ondulée (241) qui sont reliés à deux extrémités de la section de raccordement (242) ; et
deux des ressorts de forme ondulée (241) sont respectivement insérés entre le chemin de roulement intérieur (22) et le chemin de roulement extérieur (23) de l'une des paires de chemins de roulement.

7. Accouplement du type broche à trois billes selon la revendication 2, **caractérisé en ce qu'**un côté du chemin de roulement intérieur (22) faisant face à la section de montage de chemin de roulement à billes (20s) est partiellement évidé pour former une surface concave sphérique (22s) qui fait partie d'une surface sphérique et qui est en contact avec les chemins de roulement à billes (13).

8. Accouplement du type broche à trois billes selon la revendication 2, **caractérisé en ce qu'**un côté du chemin de roulement extérieur (23) opposé à la section de montage de chemin de roulement à billes (20s) est partiellement évidé pour former une surface courbe (23a) en contact avec l'agencement de cage (30).

9. Accouplement du type broche à trois billes selon la revendication 1, **caractérisé en ce qu'**une section centrale de chacun des bras (312) qui est située dans la direction circonférentielle entre deux rangées de poches à billes (31b) est évidée radialement et vers l'intérieur pour former un évidement de bras (312a).

10. Accouplement du type broche à trois billes selon la revendication 1, **caractérisé en ce que** la seconde pièce de raccordement (N) comprend un manchon coulissant (40) de forme tubulaire qui présente une première extrémité (401) dans la direction axiale (A) qui est reliée à la première pièce de raccordement (M) ;
une cavité intérieure du manchon coulissant (40) comprend trois nervures saillantes (41) dans la direction axiale (A) à proximité de la première extrémité (401), qui font saillie radialement et vers l'intérieur et qui sont espacées dans la direction circonférentielle ; les nervures saillantes (41) s'étendent dans la direction axiale (A) pour former une rainure (42) entre respectivement deux nervures saillantes (41) adjacentes ;
les bras (312) sont alignés dans la direction circonférentielle avec les nervures saillantes (41) ; les billes (32) s'appuient contre les nervures saillantes (41) ; et chacun des agencements de chemins de roulement (20) est reçu dans l'une des rainures (42).

11. Accouplement du type broche à trois billes selon la revendication 10, **caractérisé en ce que** deux côtés de chacune des nervures saillantes (41) dans la direction circonférentielle sont chacun réalisés avec une surface incurvée en creux (41a), et les billes (32) s'appuient contre les surfaces incurvées (41a).

12. Accouplement du type broche à trois billes selon la revendication 10, **caractérisé en ce qu'**une section en crochet (31H) faisant saillie vers l'extérieur dans une direction radiale de la section de forme annulaire (311) est réalisée à l'extrémité du bras (312) éloignée de la section de forme annulaire (311), et
la section en crochet (31H) s'accroche dans la nervure saillante (41) pour empêcher l'agencement de cage (30) de se détacher de la première extrémité (401).

13. Accouplement du type broche à trois billes selon la revendication 10, **caractérisé en ce qu'**une section périphérique extérieure de la section de forme annulaire (311) comprend une pluralité de saillies de forme annulaire (311a) qui font saillie radialement et vers l'extérieur, et les saillies de forme annulaire (311a) s'appuient contre une surface d'extrémité du manchon coulissant (40) à la première extrémité (401) pour confiner l'agencement de cage (30) dans la direction axiale (A).

14. Accouplement du type broche à trois billes selon la revendication 10, **caractérisé en ce que** la cavité intérieure du manchon coulissant (40) ne présente pas de nervures saillantes (41) dans la direction axiale (A) à une seconde extrémité (402) éloignée de la première extrémité (401) ;
le second raccord (N) comprend en outre un agencement d'amortissement des vibrations (50) qui est monté à la seconde extrémité (402) fixe en rotation par rapport au manchon coulissant (40) ; l'agencement d'amortissement des vibrations (50) s'étend au moins partiellement dans la cavité intérieure du manchon coulissant (40) ;
l'arbre (11) s'appuie contre l'agencement d'amortissement des vibrations (50), une extrémité axiale de l'arbre (11) à proximité de l'agencement d'amortissement des vibrations (50) forme une surface sphérique (11s) ; et une section de l'agencement d'amortissement des vibrations (50) qui est en contact avec l'arbre (11) est formée comme une surface sphérique.

15. Accouplement du type broche à trois billes selon la revendication 14, **caractérisé en ce que** l'agencement d'amortissement des vibrations (50) comprend un adaptateur (51), un boîtier coquille (52) et un tampon (53) ;
l'adaptateur (51) et le manchon coulissant (40) sont reliés l'un à l'autre de manière fixe en rotation ;
le boîtier coquille (52) est relié à l'adaptateur (51) ; le tampon (53) est prévu entre le boîtier coquille (52) et l'adaptateur (51) ;
une section de l'arbre (11) qui est en contact avec l'agencement d'amortissement des vibrations (50) est située sur le boîtier coquille (52) ; et une section du boîtier coquille (52) qui est en contact avec l'arbre (11) forme une section sphérique concave évidée(52s) sous la forme d'une surface sphérique.

16. Accouplement du type broche à trois billes selon la revendication 15, **caractérisé en ce qu'**une section périphérique intérieure de l'adaptateur (51) forme un alésage denté à emboîtement (51h).

17. Accouplement du type broche à trois billes selon la revendication 15, **caractérisé en ce que** l'adaptateur (51) est encastré dans la cavité intérieure du manchon coulissant (40) ;
une section centrale de la surface d'extrémité de l'adaptateur (51) faisant face à l'arbre (11) forme une saillie (512) en faisant saillie dans la direction de l'arbre (11) ; et le boîtier coquille (52) est poussé sur la saillie (512) de façon que le boîtier coquille soit mobile axialement par rapport à la saillie.

18. Accouplement du type broche à trois billes selon la revendication 17, **caractérisé en ce que**, lorsque le tampon (53) n'est pas comprimé, un espace (G) est présent entre le boîtier coquille (52) et la surface d'extrémité de l'adaptateur (51) tournée vers l'arbre (11).

19. Mécanisme de direction comprenant un moteur, un accouplement et un agencement de vis sans fin et de vis sans fin à denture hélicoïdale, **caractérisé en ce que** l'accouplement est un accouplement du type broche à trois billes selon l'une quelconque des revendications 1 à 18 ;
le premier raccord (M) de l'accouplement du type broche à trois billes et une vis sans fin de l'agencement de vis sans fin et de vis sans fin à denture hélicoïdale sont reliés de manière fixe en rotation ; et le second raccord (N) de l'accouplement du type broche à trois billes et un arbre de sortie du moteur sont reliés de manière fixe en rotation.
